Europäisches Patentamt

European Patent Office

Office européen des brevets

(11) Veröffentlichungsnummer: **0 326 841**

**A2**

## (12) EUROPÄISCHE PATENTANMELDUNG

(21) Anmeldenummer: 89100654.6

(22) Anmeldetag: 16.01.89

(51) Int. Cl.⁴: **B60R 22/40 , G01P 15/08**

(30) Priorität: 01.02.88 DE 3802860
05.03.88 DE 3807339

(43) Veröffentlichungstag der Anmeldung:
09.08.89 Patentblatt 89/32

(84) Benannte Vertragsstaaten:
DE ES FR GB IT SE

(71) Anmelder: DODUCO GMBH + Co Dr. Eugen
Dürrwächter
Im Altgefäll 12
D-7530 Pforzheim(DE)

(72) Erfinder: Ney, Joachim, Dipl.-Ing.
Ob den Linden 50
D-7532 Niefern-Öschelbronn(DE)

(74) Vertreter: Twelmeier, Ulrich, Dipl.Phys. et al
Westliche Karl-Friedrich-Strasse 29-31
D-7530 Pforzheim(DE)

(54) **Kipp- und Beschleunigungssensor.**

(57) Der Sensor besteht aus einem Träger (11) mit einer Lichtschranke (17), einem am Träger (11) beweglich gehaltenen, auf Änderungen der Lage und/oder des Bewegungszustandes des Trägers (11) ansprechenden und darauf mit einer Lageänderung relativ zum Träger (11) antwortenden Körper (14), der so angeordnet ist, dass seine Bewegungsbahn den Lichtstrahlweg der Lichtschranke (17) kreuzt und einer elektrischen Schaltung (17, 18, 20, 21, 22), welche durch die Lichtschranke gesteuert elektromagnetisch betätigbare Stellglieder (24-27) antreibt. Die Schaltung steuert den Strom im Lastschaltkreis pulsbreitenmoduliert und verlängert zur Erhöhung des Anzugstromes den ersten nach dem Öffnen der Lichtschranke auftretenden Impuls des Pulsbreitenmodulators.

FIG. 1

EP 0 326 841 A2

## Kipp- und Beschleunigungssensor

Die Erfindung geht aus von einem Sensor mit den im Oberbegriff des Anspruchs 1 angegebenen Merkmalen.

Aus dem DE-GM 85 09 766 ist bereits ein Kippsensor zum Blockieren des Abrollmechanismus von Sicherheitsgurten in Fahrzeugen bekannt, welcher ein Gehäuse und darin einen elektrischen Schalter aufweist, der durch ein sich selbsttätig zurückstellendes Betätigungsglied betätigbar ist. Dieses Betätigungsglied steht unter der Einwirkung einer Kugel, welche in einer im Gehäuse fest angebrachten Pfanne frei beweglich angeordnet und durch das als Deckel für die Pfanne ausgebildete Betätigungsglied in der Pfanne gehalten ist. Wird das Gehäuse gekippt oder beschleunigt, stößt die Kugel gegen das Betätigungsglied, lenkt es aus und nähert dadurch einen Magneten, welcher an einem Fortsatz des Betätigungsgliedes angebracht ist, einem Hall-Sensor an, welcher daraufhin ein Ausgangssignal abgibt, welches zum Verriegeln des Abrollmechanismus eines oder mehrerer Sicherheitsgurte ausgenutzt werden kann. Zu diesem Zweck kann jedem Abrollmechanismus eine elektromagnetische Verriegelungsvorrichtung zugeordnet sein, die beispielsweise aus einer Spule und einem darin verschieblich angeordneten Schlaganker besteht, der den Abrollmechanismus mechanisch verriegelt.

Es ist auch bereits ein Sensor bekannt, der in einem Gehäuse einen pendelnd gelagerten Körper aufweist, der bei Überschlag oder Aufprall eines Fahrzeugs ausgelenkt wird und dabei gegen einen Kipphebel stößt, der dadurch ebenfalls ausgelenkt wird und in den Lichtstrahlweg einer Lichtschranke eintaucht, die daraufhin ein Sicherheitssystem aktiviert.

Die bekannten Sensoren haben Nachteile, wenn man sie verwenden will, um mit ihnen die Abrollmechanismen einer variablen Anzahl von Sicherheitsgurten zu verriegeln. Diese Forderung stellt sich insbesondere bei Kabriolett-Fahrzeugen, die keine das Fahrzeugdach tragenden Pfosten haben, an denen die Sicherheitsgurte befestigt werden können. Statt dessen ist es erwünscht, einen zentral angeordneten Sensor zu haben, mit dem alle im Fahrzeug vorgesehenen Sicherheitsgurte blockiert werden können.

Der hinsichtlich seines pendelnd gelagerten Körpers artverwandte Sensor ist dafür ungeeignet, weil er von seinem Ausgangssignal her für ein anderes Sicherheitssystem ausgelegt ist; insbesondere kann er nicht in einem Fahrzeugtyp zum Blockieren beispielsweise zweier Sicherheitsgurte und unverändert in einem anderen Fahrzeugtyp z.B. zum Blockieren von vier oder fünf Sicherheitsgurten eingesetzt werden, da seine Ausgangsleistung nicht zur Versorgung unterschiedlicher ohmisch-induktiver Lasten ausgelegt ist. Ausserdem eignet er sich nicht für einen Fail-Safe-Betrieb bei Sicherheitsgurten. Durch den Fail-Safe-Betrieb soll sichergestellt werden, dass bei einem Stromausfall im Sensor die Sicherheitsgurte auf jeden Fall blockiert werden. Da der Fail-Safe-Betrieb andererseits verlangt, dass die elektromagnetisch betätigten Stellglieder (Schlaganker) in den Verriegelungsvorrichtungen der Sicherheitsgurte in normaler Fahrzeuglage und in normalem Fahrbetrieb ohne größere positive oder negative Beschleunigung (die Gurte sind frei beweglich) dauernd Strom ziehen, kommt es ferner darauf an, diesen Dauerstrom wegen der damit verbundenen Erwärmung so niedrig wie möglich zu halten. Auch dafür liefern die bekannten Sensoren keine Lösung.

Der vorliegenden Erfindung liegt die Aufgabe zugrunde, einen Sensor der eingangs genannten Art zu schaffen, der unverändert für die Verriegelung der Abrollmechanismen einer unterschiedlichen Anzahl von Sicherheitsgurten verwendet werden kann und dabei einen Fail-Safe-Betrieb bei minimalem Dauerstrom ermöglicht.

Diese Aufgabe wird gelöst durch einen Sensor mit den im Anspruch 1 angegebenen Merkmalen. Vorteilhafte Weiterbildungen der Erfindung sind Gegenstand der Unteransprüche.

Mit dem erfindungsgemäßem Sensor wird die Last, die aus einer unterschiedlichen Anzahl von Elektromagneten bestehen kann, pulsbreitenmoduliert angesteuert. Dadurch ist es möglich, dass jeder Elektromagnet, der als Last an die elektrische Schaltung des Sensors angeschlossen ist, sich den Strom, den er benötigt, unabhängig von der Zahl der weiteren angeschlossenen Elektromagnete selbst zieht. Gleichzeitig ermöglicht es die Verwendung eines als astabiler Multivibrator ausgebildeten Pulsbreitenmodulators auf einfache Weise durch entsprechende Wahl der Pulsbreiten einerseits den Anzugsstrom der Elektromagneten so hoch zu halten, dass die Elektromagneten auch tatsächlich zuverlässig anziehen und dadurch die Abrollmechanismen der Sicherheitsgurte freigeben, und andererseits nach dem Anziehen der Elektromagneten deren Haltestrom durch Verringerung der Pulsbreiten soweit abzusenken, dass er gerade noch ausreicht, um die Elekromagneten in der angezogenen Stellung zu halten. Die Elektromagneten können auf diese Weise mit minimalem Haltestrom betrieben werden, so dass die damit verbundene Erwärmung im Dauerbetrieb ebenfalls auf ein Minimum reduziert ist. Der Pulsbreitenmodulator wird abhängig vom Ausgangssignal der Lichtschranke aktiviert oder inaktiviert, zweckmässigerweise so, dass

2

beim Unterbrechen der Lichtschranke der Pulsbreitenmodulator inaktiviert wird und die Elektromagneten stromlos werden und abfallen, während beim Öffnen der Lichtschranke der Pulsbreitenmodulator aktiviert wird, worauf die Elektromagneten mit Strom versorgt werden und anziehen.

Damit die Sicherheitsgurte nicht schon bei sehr kurzzeitigem, vorübergehendem Ansprechen der Lichtschranke, beispielsweise auf holpriger Fahrbahn, blockiert werden, ist in der elektrischen Schaltung des Sensors vorzugsweise eine zusätzliche Baugruppe vorgesehen, welche bei Änderungen des Schaltzustandes der Lichtschranke, welche eine vorgegebene Zeitdauer nicht überschreiten, eine Aktivierung des Pulsbreitenmodulators verhindert.

Ein bevorzugtes Ausführungsbeispiel des Sensors und seiner Schaltung ist in den beigefügten Zeichnungen schematisch dargestellt und wird nachfolgend beschrieben.

Figur 1 zeigt einen Schnitt durch den Sensor,

Figur 2 ist ein Blockschaltbild der elektrischen Schaltung des Sensors,

Figur 3 ist ein detaillierter Schaltplan der Schaltung des Sensors, und

Figur 4 ist ein Diagramm, welches in übereinander angeordneten Darstellungen den zeitlichen Verlauf der Ausgangsspannung $U_{BE}$ des Pulsbreitenmodulators, des Ausgangs stromes der Lichtschranke $I_s$, sowie des Laststromes $I_L$ für verschiedene Sensorzustände zeigt.

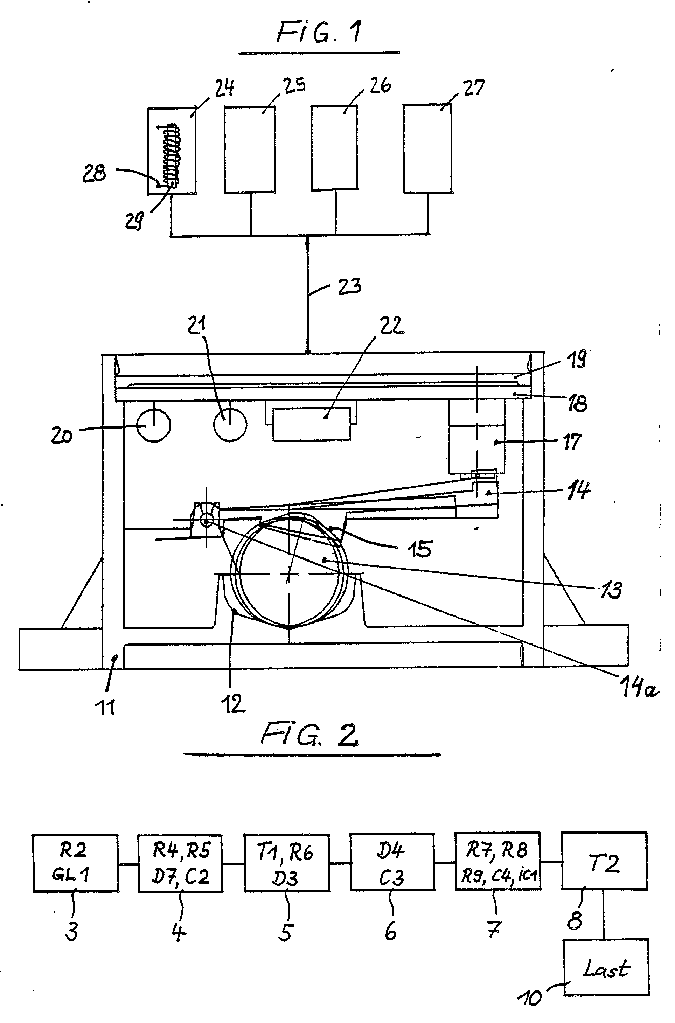

Der Sensor hat ein Gehäuse 11, in welchem eine Pfanne 12 ausgebildet ist, in welcher eine Kugel 13 frei beweglich angeordnet ist. Der Pfanne 12 gegenüberliegend ist ein Hebel 14 angeordnet, welcher an seinem einen Ende um eine am Gehäuse 11 feste Achse 14a verschwenkbar angelenkt ist. An seiner der Pfanne 12 zugewandten Seite des Hebels 14 ist an einem Vorsprung des Hebels eine Mulde 15 ausgebildet, mit welcher der Hebel 14 auf der Kugel 13 liegt und sie unverlierbar in der Pfanne 12 hält. In Normallage des Sensors, d.h. bei ruhendem oder gleichförmig bewegtem Fahrzeug auf ebener Fahrbahn befindet sich die Kugel 13 an der tiefsten Stelle der Pfanne 12 in Ruhe. Wird das Fahrzeug und mit ihm das Gehäuse 11 gekippt oder beschleunigt oder verzögert, dann rollt die Kugel 13 aus ihrer tiefsten Lage in der Pfanne 12 heraus und hebt dabei den Hebel 14 an, welcher dadurch mit seinem freien Ende 16 in den Lichtstrahlweg einer gabelförmig ausgebildeten Lichtschranke 17 eintaucht und dabei den zwischen den beiden Zinken der Gabel verlaufenden Lichtstrahl unterbricht. In der Fig. 1 ist die Lichtschranke so angeordnet, dass der Lichtstrahl senkrecht zur Zeichenebene verläuft, so dass von den beiden Zinken der gabelförmigen Lichtschranke nur einer zu sehen ist, während der zweite hinter der Zeichenebene liegt.

Die Lichtschranke 17 befindet sich auf einer Leiterplatte 18, welche der Pfanne 12 gegenüberliegt und durch die das Gehäuse 11 verschließende Deckplatte 19 gehalten und fixiert wird. Die Leiterplatte 18 trägt nicht nur die Lichtschranke 17, sondern auch die übrigen Elemente der zum Sensor gehörenden elektrischen Schaltung, von denen drei Elemente 20, 21 und 22 beispielhaft dargestellt sind.

Aus dem Gehäuse führt eine elektrische Leitung 23 heraus, welche sich verzweigt und zu vier elektromagnetisch betätigbaren Stellgliedern 24 bis 27 führt, mit denen Abrollmechanismen von vier Sicherheitsgurten verriegelt werden können. Diese Stellglieder sind in Fig. 1 symbolisch durch eine elektrische Wicklung 28 mit einem darin angeordneten Schlaganker 29 dargestellt.

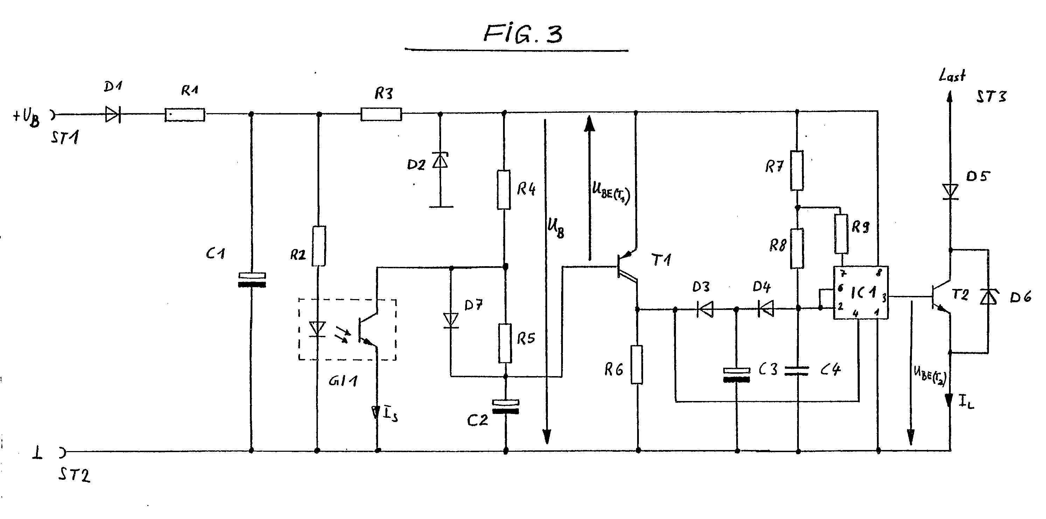

Figur 2 zeigt das vereinfachte Blockschaltbild einer elektrischen Schaltung, welche sich auf der Leiterplatte 18 des in Fig. 1 dargestellten Sensors befindet. Die Schaltung umfaßt eine Baugruppe 3 mit einer Lichtschranke GL1, welche eine Schaltstufe 5 steuert, die dazu dient, einen astabilen Multivibrator 7 in Abhängigkeit von dem Ausgangssignal der Lichtschranke GL1 entweder zu aktivieren oder zu inaktivieren. Zwischen der Schaltstufe 5 und dem astabilen Multivibrator liegt eine Baugruppe 6, welche den ersten oder die ersten nach dem Aktivieren des astabilen Multivibrators 7 auftretenden Impuls(e) desselben im Vergleich zu den nachfolgenden Impulsen verlängert. Der astabile Multivibrator arbeitet somit als Pulsbreitenmodulator. Zwischen der Baugruppe 3 und der für die Aktivierung des astabilen Multivibrators 7 vorgesehenen Schaltstufe 5 ist eine Baugruppe 4 vorgesehen, welche bei Änderungen des Schaltzustandes der Lichtschranke GL1, welche eine vorgegebene Zeitdauer nicht überschreiten, eine Aktivierung des astabilen Multivibrators 7 verhindert. Der Pulsbreitenmodulator 6, 7 steuert schließlich eine Schaltstufe 8, welche den Strom zur Last 10 für die Dauer des jeweiligen Impulses des Pulsbreitenmodulators fließen läßt, während der übrigen Zeiten jedoch unterbricht. Wie eine solche Schaltung im Detail ausgeführt sein kann, zeigt der Schaltplan in Fig. 3. Zur Erleichterung der Übersicht sind in den einzelnen Blöcken des Blockschaltbildes die zugehörigen Bauelemente aus Fig. 3 mit den dort verwendeten Bezeichnungen eingetragen.

Die Schaltung wird über elektrische Anschlüsse ST1 und ST2 mit einer Betriebsspannung $U_B$ versorgt. Als Spannungsquelle verwendet man zweckmässigerweise die Fahrzeugbatterie. Die Spannungsquelle speist über einen Vorwiderstand R2 eine Gabellichtschranke GL1 im open-collector-Betrieb. Ist die Lichtschranke GL1 geöffnet (der Lichtstrahl nicht unterbrochen), dann gibt sie ein Ausgangssignal in Form eines

3

Stroms mit der Stromstärke $I_s$ ab. Parallel zur Lichtschranke liegt ein Ladekondensator C2 in Reihe mit einem Widerstand R5, dem eine Diode D7 parallel geschaltet ist. Über einen weiteren Vorwiderstand R4, welcher in Reihe mit dem Vorwiderstand R5 liegt, ist der Ladekondensator C2 mit der Spannungsquelle (Anschluß ST1) verbunden. Wie noch erläutert werden wird, bewirkt die aus R4, R5, C2 und D7 bestehende Baugruppe eine Einschaltverzögerung des Pulsbreitenmodulators. Dieser Baugruppe ist die Schaltstufe 5 nachgeschaltet, welche aus einem Transistor T1 in Emitterschaltung, einem Widerstand R6 und einer Diode D3 besteht. Diese Schaltstufe steuert den astabilen Multivibrator 7, der aus einem integrierten Schaltkreis IC1, Widerständen R7, R8, R9 und einem Kondensator C4 besteht. Bei dem integrierten Schaltkreis IC1 handelt es sich um einen Timer-Baustein. Die Pulsbreitenmodulation des astabilen Multivibrators durch die Schaltstufe 5 erfolgt über eine Diode D4 und einen Ladekondensator C3, welcher parallel zum Eingang (Pin 2) des integrierten Schaltkreises IC1 liegt. Wie noch erläutert wird, bewirken die Diode D4 und der Kondensator C3 eine Verlängerung des jeweils ersten Impulses des astabilen Multivibrators. Der Ausgang des astabilen Multivibrators (Pin 3 des IC1) steuert direkt einen Schalttransistor T2, durch den der Strom zur Last 10 (Wicklungen 28 in Fig. 1) fließt.

Die Schaltung arbeitet wie folgt:

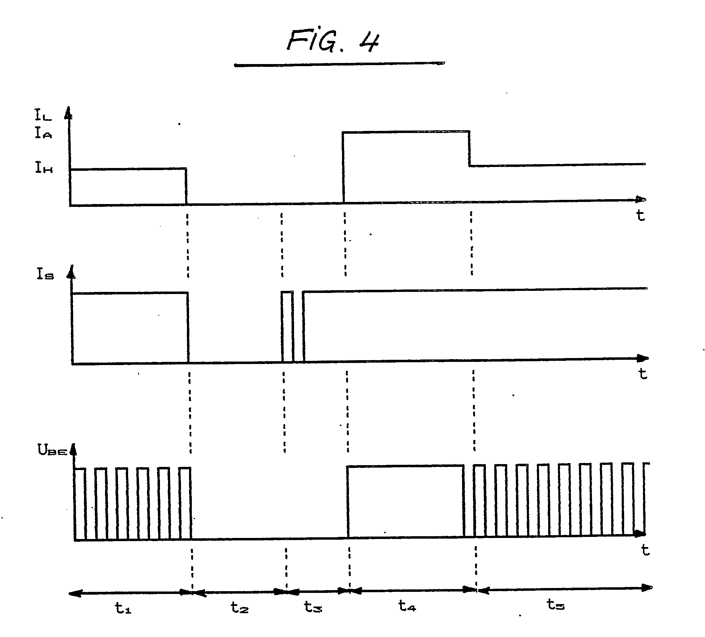

Im Zustand der Schaltung bei geöffneter Lichtschranke GL1 (der Lichtstrahl ist nicht unterbrochen) fließt der Strom von der Stromquelle über den Vorwiderstand R4 und die Lichtschranke GL1. Dieser Zustand ist in Fig. 4 in den Zeitabschnitten $t_1$ und $t_5$ dargestellt. Der Kondensator C2 ist bis auf eine Spannung $U_B - U_{BE(t1)}$ entladen; der Transistor T1 ist durchgesteuert, der Pulsbreitenmodulator arbeitet und gibt an den Schalttransistor T2 eine Folge von Rechteckimpulsen ab, deren Spannungsamplitude $U_{BE(t2)}$ ist.

Wird infolge einer Änderung der Lage oder des Bewegungszustandes des Sensors der Lichtstrahl durch den Hebel 14 unterbrochen (im Diagramm der Fig 4 ist das der Übergang von der Zeitspanne $t_1$ zur Zeitspanne $t_2$), dann wird die Lichtschranke GL1 gesperrt und entsprechend hochohmig. Der Kondensator C2 wird über die Vorwiderstände R4 und R5 sowie über die Diode D7 sehr schnell auf die Versorgungsspannung $U_B$ aufgeladen und sperrt dann den Transistor T1, wodurch der integrierte Schaltkreis IC1 in den Resetzustand versetzt wird. Die Folge ist, dass am Ausgang des integrierten Schaltkreises IC1 (Pin 3) keine Impulse mehr erscheinen, der Transistor T2 sperrt und durch die Last kein Strom mehr fließt. Handelt es sich bei der Last um elektrische Wicklungen 28 mit federbelastetem Schlaganker 29 (siehe Fig.1) dann werden die Schlaganker durch die sie belastende Feder in ihre eine Endstellung getrieben, in der sie den Abrollmechanismus des jeweiligen Sicherheitsgurtes blockieren.

Wird die Lichtschranke GL1 wieder geöffnet, so wird der Ladekondensator C2 über den Widerstand R5 und die Lichtschranke GL1 wieder entladen, allerdings mit einer größeren Zeitkonstante als beim Laden des Kondensators C2. Auf diese Weise wird bewirkt, dass beim Öffnen der Lichtschranke GL1 der Transistor T1 erst nach einer gewissen Verzögerungszeit wieder durchgesteuert wird, so dass kurze Störungen (erneutes kurzzeitiges Öffnen und Wiederschließen der Lichtschranke GL1) nicht zu einem Stromfluß durch die Last führen. In Fig. 4 ist dies im Zeitabschnitt $t_3$ dargestellt: Der kurzzeitige Stromfluß $I_s$ durch die Lichtschranke GL1 führt nicht zu einem Ausgangsimpuls des Pulsbreitenmodulators und damit nicht zu einem Stromfluß durch die Last; die Sicherheitsgurte werden bei solchen kurzzeitigen Störungen, welche durch Erschütterungen und ähnliches ausgelöst sein können, nicht freigegeben.

Erst wenn die Dauer des Stromflusses durch die Lichtschranke GL1 die durch die Zeitkonstante für das Entladen des Kondensators C2 und die minimale Basis-Emitter-Spannung $U_{BE(T1)}$ des Transistors T1, um diesen leitend werden zu lassen, bestimmte Verzögerungszeit übersteigt (Übergang von der Zeitspanne $t_3$ in die Zeitspanne $t_4$ in Fig. 4) wird der Transistor T1 leitend, das Potential am Eingang (Pin 4) des integrierten Schaltkreises IC1 wird angehoben und der integrierte Schaltkreis verläßt den Resetzustand.

Während der nun erfolgenden ersten Aufladung des Kondensators C4 des astabilen Multivibrators wird auch der parallel zu ihm liegende Kondensator C3 aufgeladen. Die Kapazitäten dieser beiden Kondensatoren C3 und C4 addieren sich. Ist der Kondensator C3 einmal aufgeladen, dann bleibt er bis zum nächsten Reset des integrierten Schaltkreises IC1 durch erneute Unterbrechung des Lichtstrahls der Lichtschranke GL1 aufgeladen und ist solange an der Funktion des astabilen Multivibrators praktisch nicht mehr beteiligt. Durch die Mitaufladung des Kondensators C3 wird also der erste nach dem Öffnen der Lichtschranke GL1 auftretende Impuls des Pulsbreitenmodulators im Vergleich zu den nachfolgenden Impulsen verlängert (siehe Zeitspanne $t_4$ in Fig. 4) was einen erhöhten Strom $I_A$ durch die Last zur Folge hat.

Damit trägt die Schaltung der Tatsache Rechnung, dass Elektromagnete einen Anzugsstrom $I_A$ benötigen, der größer ist als der Haltestrom $I_H$; nachdem die Elektromagnete durch den höheren Anzugstrom angezogen haben, wird der durch die Last fließende Strom $I_L$ auf den niedrigen Haltestrom $I_H$ abgesenkt. Beim nächsten Sperren der Lichtschranke GL1 wird der Kondensator C3 über die Diode D3 entladen. Bei Stromausfall fallen die Elektromagnete ab, so dass die Sicherheitsgurte arretiert werden (Fail-Safe-Betrieb).

Der Widerstand R1 und der Kondensator C1 sorgen für die Unterdrückung transienter Störungen auf der Versorgungsspannung. Die Diode D1 schützt die Schaltung gegen eine Verpolung der Versorgungsspannung. Der Widerstand R2 begrenzt den Strom durch die Leuchtdiode der Lichtschranke GL1. Der Widerstand R3 und die Diode D2 stabilisieren die Versorgungsspannung $U_B$. Die Diode D5 schützt den gesamten Lastkreis vor Verpolung der Versorgungsspannung. Die Diode D6 schützt den Schalttransistor T2 vor transienten Überspannungen.

Die in Fig. 3 dargestellte Schaltung kann mit folgenden Bauelementen verwirklicht werden:

| IC1 : | Timer-Baustein TLC555 |
|---|---|
| GL1 : | OPB825 |
| C1 : | 47 µF |
| C2 : | 22 µF |
| C3 : | 1000 nF |
| C4 : | 100 nF |
| D1 : | BAV103 |
| D2 : | BZV55C5V1 |
| D3, D4 : | Zweifachdiode BAV 99 |
| D5 : | BAV103 |
| D6 : | BZV55C36 |
| D7 : | BAS32 |
| R1 : | 82Ω |
| R2 : | 470Ω |
| R3 : | 100Ω |
| R4 : | 1 kΩ |
| R5 : | 100 kΩ |
| R6 : | 1 kΩ |
| R7 : | 91 kΩ |
| R8 : | 9,1 kΩ |
| R9 : | 20 kΩ |
| T1 : | BC516 |
| T2 : | ZTX653 |

Damit erhält man bei einer Versorgungsspannung $U_B$ = 5V im Zustand $t_1$ Impulse mit einer Amplitude von 0,7 V, die mit einer Frequenz von ungefähr 100 Hz auftreten und eine Länge von ungefähr 7 ms sowie einen Abstand von ungefähr 3 ms haben. Der nach dem Öffnen der Lichtschranke auftretende erste Impuls des Pulsbreitenmodulators im Zeitabschnitt $t_4$ gemäß Fig. 4 ist auf eine Impulsbreite von ungefähr 76 ms verlängert. Die Zeitkonstante für das Aufladen des Ladekondensators C2 ist im wesentlichen durch R4C2 bestimmt und beträgt ungefähr 22 ms. Die Zeitkonstante für das Entladen des Kondensators C2 ist im wesentlichen durch R5C2 bestimmt und beträgt ungefähr 2,2 s, was jedoch nicht der Zeit $t_3$ entspricht, da der Transistor T1 schon bei relativ kleinen Basis-Emitter-Spannungen $U_{BE(T1)}$ öffnet ($t_3$ = 600 ms).

## Ansprüche

1. Sensor, bestehend aus einem Träger, einer an dem Träger angebrachten Lichtschranke mit elektrischem Ausgangssignal,
einem am Träger beweglich gehaltenen, auf Änderungen der Lage und/oder des Bewegungszustandes des Trägers ansprechenden und darauf mit einer Lageänderung relativ zum Träger antwortenden Körper, der so angeordnet ist, dass seine Bewegungsbahn den Lichtstrahlweg der Lichtschranke kreuzt,
und aus einer elektrischen Schaltung, welche durch das Ausgangssignal der Lichtschranke gesteuert als ohmischinduktive Last ein elektromagnetisch betätigbares Stellglied antreibt, welches sich bei stromlosem Lastschaltkreis in einer ersten Stellung und bei Stromfluß im Lastschaltkreis in einer davon verschiedenen zweiten Stellung befindet,
dadurch gekennzeichnet, dass die Schaltung einen astabilen Multivibrator (7) aufweist, dessen Ausgang mit dem Eingang einer Schaltstufe (8) für den im Lastschaltkreis fließenden Strom verbunden ist und dessen Eingang über eine Schaltstufe (5), welche den astabilen Multivibrator (7) abhängig davon, ob die Lichtschranke (GL1) ein Ausgangssignal abgibt oder nicht, entweder aktiviert oder inaktiviert, und über eine Baugruppe (6), welche den oder die ersten nach dem Aktivieren des astabilen Multivibrators (7) auftretenden Impuls(e) des astabilen Multivibrators (7) im Vergleich zu den nachfolgenden Impulsen verlängert und somit eine Pulsbreitenmodulation bewirkt, mit dem Ausgang der Lichtschranke (GL1) verbunden ist.

2. Sensor nach Anspruch 1, dadurch gekennzeichnet, dass zwischen der Lichtschranke (GL1) und der für die Aktivierung des astabilen Multivibrators (7) vorgesehenen Schaltstufe (5) eine Baugruppe (4) vorgesehen ist, welche bei Änderungen des Schaltzustandes der Lichtschranke (GL1), welche eine vorgegebene Zeitdauer ($t_3$) nicht überschreiten, eine Aktivierung des astabilen Multivibrators (7) verhindert.

3. Sensor nach Anspruch 1, dadurch gekennzeichnet, dass die Baugruppe (6) einen über eine Diode (D4) parallel zum astabilen Multivibrator (7) geschalteten Ladekondensator (C3) umfaßt.

4. Sensor nach Anspruch 1, dadurch gekennzeichnet, dass die den astabilen Multivibrator (7) aktivierende Schaltstufe (5) einen Transistor (T1) in Emitterschaltung umfaßt, der auf die Resetfunktion des astabilen Multivibrators (7) wirkt sowie über eine Diode (D4) den Ladekondensator (C3) der Baugruppe (6) entlädt, und dessen Basis von der Lichtschranke (GL1) angesteuert wird.

5. Sensor nach Anspruch 2, dadurch gekennzeichnet, dass die Baugruppe (4) einen zur Schaltstufe (5) und zur Lichtschranke (GL1) parallel geschalteten Ladekondensator (C2) umfaßt, der bei gesperrter Lichtschranke (GL1) von der Spannungsquelle ($U_B$) der Schaltung über einen Vorwiderstand R4 und über einen weiteren Vorwiderstand R5, dem eine für den Ladestrom durchgängige Diode (D7) parallel geschaltet ist, aufgeladen wird und dadurch die Schaltstufe (5) sperrt und bei geöffneter Lichtschranke (GL1) über den Widerstand R5 und die Lichtschranke (GL1) mit einer Zeitkonstante, die größer ist als die Zeitkonstante für den Ladevorgang, entladen wird.

6. Sensor nach Anspruch 1, dadurch gekennzeichnet, dass die Schaltstufe (8) für den Lastschaltkreis im wesentlichen aus einem Schalttransistor (T2) besteht.

7. Sensor nach Anspruch 1, dadurch gekennzeichnet, dass der Träger (11) ein Gehäuse ist, in welchem die mechanischen Elemente (12-14) des Sensors und die Elemente der Schaltung mit Ausnahme der ohmisch-induktiven Last (28) angeordnet sind.

8. Sensor nach Anspruch 1, dadurch gekennzeichnet, dass die Schaltung bei Ausfall des Versorgungsstromes den im Lastkreis fließenden Strom sperrt (Fail-Safe-Betrieb).

## FIG. 1

## FIG. 2

| R2<br>GL1 | | R4,R5<br>D7,C2 | | T1,R6<br>D3 | | D4<br>C3 | | R7,R8<br>R9,C4,ic1 | | T2 |
|---|---|---|---|---|---|---|---|---|---|---|

3   4   5   6   7   8

Last

10

FIG. 3

EP 0 326 841 A2

# FIG. 4